# FASCICULE DE BREVET EUROPEEN

(11) **EP 2 550 722 B1**
(45) Date de publication et mention de la délivrance du brevet: **16.05.2018**
(21) Numéro de dépôt: 11716049.9
(22) Date de dépôt: 22.03.2011
(51) Int. Cl.: H02K 5/22

(54) **MACHINE ELECTRIQUE COMPORTANT UNE BOITE A BORNES AMELIOREE**
E-MOTOR MIT VERBESSERTEM VERTEILERKASTEN
ELECTRIC MACHINE COMPRISING AN IMPROVED TERMINAL BOX

(30) Priorité: 29.03.2010 US 318423 P; 24.03.2010 FR 1052136
(43) Date de publication de la demande: 30.01.2013
(73) Titulaire: Moteurs Leroy-Somer, 16000 Angouleme (FR)
(72) Inventeur: VOHLGEMUTH, Patrick, F-16110 Marillac Le Franc (FR)
(74) Mandataire: Nony
(86) Numéro de dépôt international: PCT/IB2011/051200
(87) Numéro de publication internationale: WO 2011/117816

(56) Documents cités:
- US-A- 5 192 888
- US-A- 5 637 829
- US-A- 6 002 083

## Description

La présente invention concerne les machines électriques et plus particulièrement celles équipées de boîtes à bornes permettant de les raccorder à des câbles électriques extérieurs à la machine, voire de loger un régulateur ou éventuellement un variateur.

Les boîtes à bornes se fixent généralement sur le carter de la machine, notamment en partie supérieure.

Le brevet US 6 002 083 décrit une boîte à bornes formée par l'assemblage de deux coquilles dont l'une comporte une première ouverture pour le passage des câbles vers l'extérieur de la machine et une deuxième ouverture vers l'intérieur de la machine.

La demande canadienne CA 85 33 79, le brevet français FR 1 092 897, la demande de brevet français FR 2 778 796, la demande britannique GB 2 340 673, les demandes japonaises JP 05-083899 et JP 57 025 133 et les brevets US 5 192 888, US 5 637 829 et US 5 769 659 décrivent d'autres exemples de boîtes à bornes.

Il existe un besoin pour simplifier encore la fabrication des machines électriques.

L'invention y parvient, selon l'un de ses aspects, grâce à une machine électrique comportant :
- un carter,
- une boîte à bornes fixée sur le carter,
la boîte à bornes comportant deux demi-coquilles assemblées l'une contre l'autre, ces demi-coquilles étant identiques avant formation d'un ou plusieurs passages de câbles par enlèvement d'une ou plusieurs parties amovibles prévues à cet effet.

L'utilisation de demi-coquilles identiques simplifie la fabrication, puisqu'une seule empreinte de moule peut être utilisée.

De plus, un opérateur peut accéder au contenu de la boîte à bornes sans avoir à toucher les câbles, en enlevant la demi-coquille qui n'est pas traversée par les câbles, ce qui est avantageux du point de la maintenance et de la sécurité.

Avantageusement, chacune des demi-coquilles est pourvue d'une partie femelle et d'une partie mâle, qui coopèrent respectivement avec les parties mâle et femelle de l'autre demi-coquille, lorsque les deux demi-coquilles sont assemblées pour former la boîte à bornes.

Ces parties mâle et femelle peuvent notamment permettre de réaliser une fermeture plus hermétique de la boîte à bornes, tout en assurant le positionnement précis des bords en contact des demi-coquilles.

Hormis les parties mâle et femelle, chaque demi-coquille peut avoir une forme symétrique par rapport à un plan médian transversal de symétrie pour la demi-coquille.

Chaque partie mâle comporte par exemple une languette formant saillie, qui vient recouvrir le dessus et le côté de l'autre demi-coquille.

L'extrémité de la languette adjacente au plan médian transversal de la boîte à bornes peut s'étendre obliquement à 45° relativement à l'axe longitudinal de la languette, dans un exemple de réalisation préféré, de façon à ce que chaque languette se positionne sans discontinuité dans le prolongement de l'autre languette.

Selon une autre caractéristique avantageuse de l'invention, chacune des demi-coquilles est dépourvue initialement, c'est-à-dire lorsqu'elle sort du moule ayant servi à la réaliser, de passage ouvert pour les câbles extérieurs à la machine. De préférence, le ou les passages pour les câbles extérieurs à la machine sont réalisés par enlèvement d'une ou plusieurs parties amovibles. Cette ou ces parties amovibles sont délimitées chacune par une zone amincie réalisée lors du moulage des demi-coquilles. Les zones amincies s'étendent par exemple pour chaque demi-coquille selon deux ensembles de cercles concentriques, chaque ensemble étant symétrique de l'autre par rapport à un plan médian transversal pour la demi-coquille.

La fixation des deux demi-coquilles entre elles peut s'effectuer par exemple par des systèmes vis/écrous, les vis étant de préférence montées de façon imperdable sur la demi-coquille correspondante. Les demi-coquilles peuvent être réalisées avec des gorges permettant le passage d'un outil de serrage de ces vis. La présence de ces gorges peut contribuer à rigidifier les demi-coquilles, et à permettre à la boîte à bornes de résister à des contraintes mécaniques accidentelles, malgré une réalisation en matière thermoplastique de la boîte à bornes.

Le carter peut être fixé inférieurement à un socle, par l'intermédiaire de pattes de fixation, lesquelles peuvent être au nombre de deux, identiques entre elles.

Chaque demi-coquille peut comporter deux ensembles de zones amincies concentriques permettant, lorsque sectionnées, de créer un passage de câble au diamètre voulu.

Chaque demi-coquille peut comporter des gorges longitudinales permettant d'y engager un outil de vissage des vis.

Chaque demi-coquille peut comporter deux montants délimités par un bord circulaire adapté à épouser la forme du carter de la machine.

L'interface entre les deux demi-coquilles peut s'étendre sensiblement selon un plan contenant l'axe de rotation de la machine.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, de manière schématique et en perspective, un exemple de machine électrique réalisée conformément à l'invention,
- la figure 2 représente isolément les deux demi-coquilles de la boîte à bornes, avant assemblage,
- la figure 3 représente le détail III de la figure 2,
- la figure 4 représente isolément l'intérieur d'une demi-coquille de la boîte à bornes,
- la figure 5 est une coupe selon V-V de la figure 4,
- la figure 6 représente extérieurement, de face, une demi-coquille de la boîte à bornes,
- la figure 7 est une coupe selon VII-VII de la figure 4,
- la figure 8 est une coupe selon VIII-VIII de la figure 4, et
- la figure 9 représente isolément une patte de fixation de la machine.

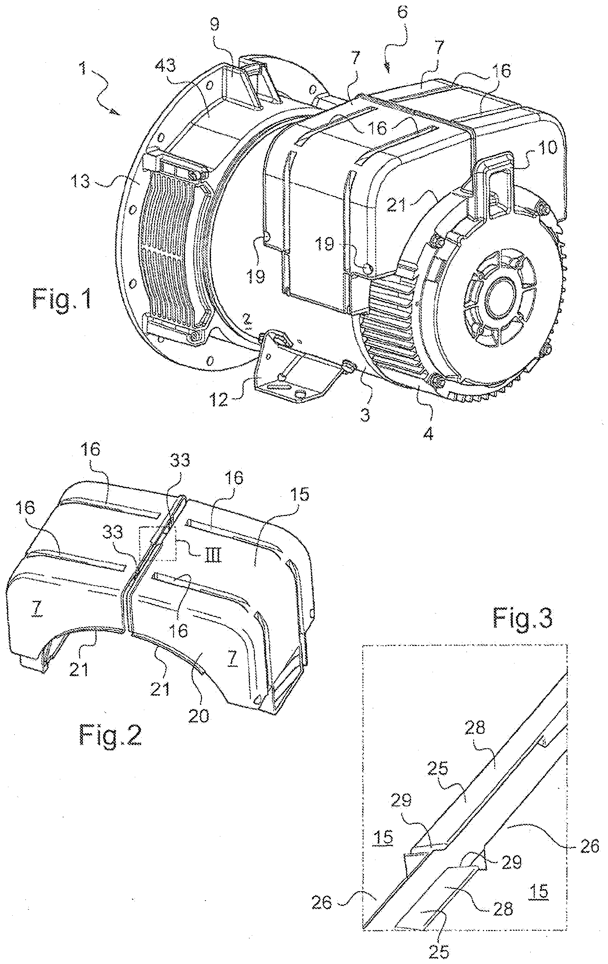

On a représenté à la figure 1 une machine électrique 1, qui est par exemple un moteur ou un générateur, et qui comporte un carter 2 métallique, réalisé par exemple par injection d'aluminium. Le carter 2 peut être fixé à un socle, non représenté, par des pattes de fixation 12.

Le carter 2 comporte une carcasse 3, par exemple de forme générale cylindrique, qui loge le stator de la machine, sur laquelle sont rapportés des flasques avant 43 et arrière 4.

La machine 1 comporte une boîte à bornes 6, comportant deux demi-coquilles identiques 7, assemblées au carter 2 et entre-elles.

Ces deux demi-coquilles 7 sont réalisées avec un même moule, de préférence en matière thermoplastique, par exemple en polypropylène, de préférence comportant une charge minérale, par exemple plus de 15 % en masse de talc, notamment 20 %, et sont initialement dépourvues de passages de câble ouverts.

La machine 1 peut comporter, à l'avant, une bride 13 pour sa fixation sur un moteur thermique destiné à l'entraîner, lorsqu'elle constitue un alternateur.

Les flasques avant 43 et arrière 4 peuvent comporter des anneaux de levage respectifs 9 et 10.

Chaque demi-coquille 7 comporte une paroi supérieure 15, pourvue de gorges longitudinales 16, qui sont dans l'exemple considéré orientées transversalement à l'axe de rotation de la machine et qui permettent d'y engager un outil de vissage pour effectuer une fixation d'une demi-coquille 7 sur l'autre, à l'aide de vis engagées à travers des passages 33 prévus à cet effet. Les gorges 16 évitent d'avoir des vis ou écrous en saillie.

Dans l'exemple considéré, chaque demi-coquille 7 comporte deux gorges 16 sur sa paroi supérieure 15, mais l'invention n'est pas limitée à un nombre particulier de gorges 16.

La paroi supérieure 15 peut être inclinée par rapport au plan horizontal de la machine électrique 1. En particulier, la paroi supérieure 15 peut être contenue dans un plan formant un angle non nul avec le plan horizontal de la machine. De la sorte, il est possible de favoriser le démoulage de la demi-coquille 7 et d'éviter la stagnation de liquide, notamment d'eau, sur la partie supérieure 15 de la demi-coquille 7.

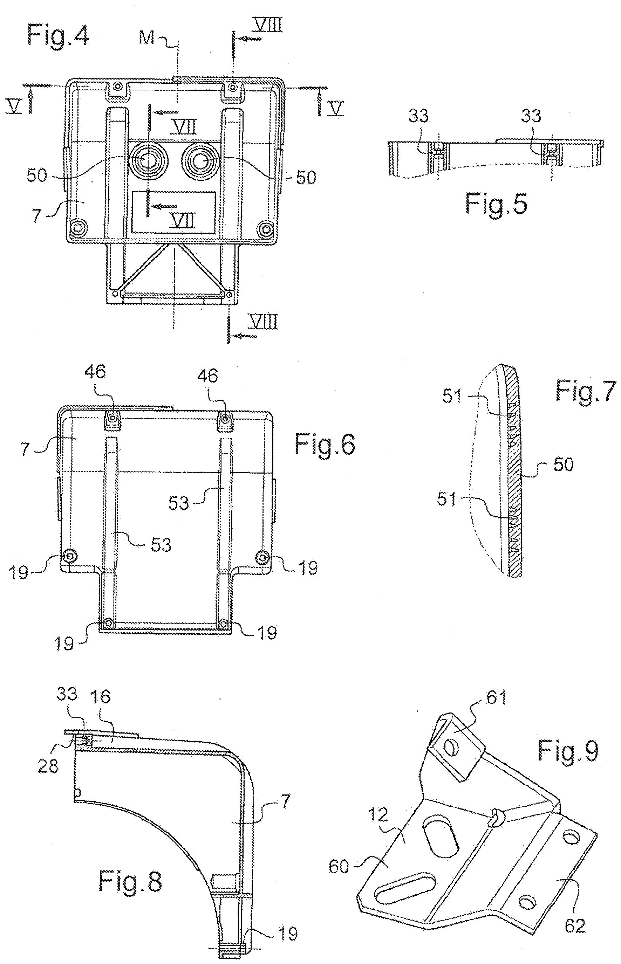

L'assemblage des demi-coquilles 7 peut se faire par des systèmes vis/écrou, les écrous 46 étant apparents sur la figure 6, étant immobilisés en rotation et en translation dans des logements adaptés à l'extrémité des gorges 16.

Chaque passage 33 peut être de diamètre inférieur à celui de la vis, de telle sorte que la vis reste engagée dans la demi-coquille même lorsqu'elle n'est plus en prise sur l'écrou retenu par l'autre demi-coquille.

Chaque demi-coquille 7 peut comporter des passages 19 pour des vis de fixation sur le carter 2 de la machine.

Chaque demi-coquille 7 peut être réalisée avec des montants 20, se raccordant à la paroi supérieure 15, ces montants 20 étant délimités inférieurement par un bord circulaire 21 qui épouse la forme cylindrique du carter 2.

Chaque demi-coquille 7 comporte une partie mâle 25 et une partie femelle 26, qui coopèrent respectivement avec les parties femelle 26 et mâle 25 de l'autre demi-coquille 7.

La partie mâle 25 comporte par exemple, comme illustré, une languette 28 qui est adaptée à recouvrir la paroi supérieure 15 de l'autre demi-coquille 7 et un montant 20 sur le côté.

La languette 28 s'étend depuis une extrémité proche du plan médian transversal M de chaque demi-coquine jusqu'au bord inférieur 21 du montant 20 correspondant.

Chaque languette 28 peut avoir, comme illustré, un bord 29 biseauté à 45° à son extrémité adjacente au plan médian M de façon à ce que les deux bords 29, en s'appliquant l'un contre l'autre, assurent la continuité des languettes 28 à l'interface entre les demi-coquilles 7.

On voit sur la figure 4 que chaque demi-coquille 7 peut comporter des parties amovibles 50 permettant lorsqu'enlevées, de créer au moins un passage pour un câble extérieur à la machine. Ces parties amovibles peuvent être délimitées par des zones amincies 51, par exemple un ensemble de zones amincies 51 concentriques, ce qui peut permettre selon l'emplacement où l'on sectionne la matière de créer un passage de diamètre plus ou moins grand, adapté au câble devant sortir de la boîte à bornes. Les parties amovibles 50 délimitées par des zones amincies 51 peuvent être adaptées à la fixation d'un presse-étoupe et/ou embout pour le câble extérieur à la machine.

Sur la figure 4, on voit que chaque demi-coquille 7 peut comporter deux ensembles de zones amincies 51 concentriques, disposées symétriquement l'un de l'autre par rapport au plan médian transversal M pour la demi-coquille.

On voit sur les figures 4 et 6 que chaque demi-coquille 7 peut comporter des gorges verticales 53 qui contribuent à assurer une certaine rigidité à la boîte à bornes.

On a représenté isolément à la figure 9 une patte de fixation 12. On voit que celle-ci peut comporter une base 60 pour la fixation au socle et deux pattes 61 et 62 pour la fixation au carter 2 de la machine, à des hauteurs différentes.

Les pattes 12 sont identiques pour les côtés gauche et droit de la machine.

Bien entendu, l'invention n'est pas limitée à l'exemple qui vient d'être décrit. On peut notamment modifier la forme des demi-coquilles et des parties mâle et femelles venant en engagement.

L'expression "comportant un" doit être comprise comme étant synonyme de "comportant au moins un".

## Revendications

1. Machine électrique (1) comportant :
- un carter (2),
- une boîte à bornes (6), fixée sur le carter, la boîte à bornes comportant deux demi-coquilles (7) assemblées l'une contre l'autre, la machine électrique étant **caractérisée en ce que** les demi-coquilles (7) sont identiques avant formation d'un ou plusieurs passages de câbles par enlèvement d'une ou plusieurs parties amovibles prévues à cet effet.

2. Machine selon la revendication 1, chacune des demi-coquilles (7) étant pourvue d'une partie femelle (26) et d'une partie mâle (25), qui coopèrent respectivement avec les parties mâle (25) et femelle (26) de l'autre demi-coquille, lorsque les deux demi-coquilles sont assemblées pour former la boîte à bornes.

3. Machine selon la revendication 2, chaque partie mâle (25) comportant une languette (28) formant saillie, qui vient recouvrir le dessus et le côté de l'autre demi-coquille.

4. Machine selon la revendication 3, l'extrémité (29) de la languette (28) adjacente au plan médian transversal (M) de la boîte à bornes s'étendant obliquement à 45° relativement à l'axe longitudinal de la languette.

5. Machine selon l'une quelconque des revendications 1 à 4, chacune des demi-coquilles (7) étant dépourvue initialement de passage ouvert pour les câbles extérieurs à la machine.

6. Machine selon l'une quelconque des revendications 1 à 5, la fixation des deux demi-coquilles s'effectuant par des vis montées de façon imperdable sur la demi-coquille (7) correspondante.

7. Machine selon l'une quelconque des revendications 1 à 6, chaque demi-coquille comportant deux ensembles de zones amincies concentriques permettant, lorsque sectionnées, de créer un passage de câble au diamètre voulu.

8. Machine selon la revendication 6, chaque demi-coquille comportant des gorges longitudinales (16) permettant d'y engager un outil de vissage des vis.

9. Machine selon l'une quelconque des revendications 1 à 8, chaque demi-coquille comportant deux montants (20) délimités par un bord (21) circulaire adapté à épouser la forme du carter (2) de la machine.

10. Machine selon l'une quelconque des revendications 1 à 9, l'interface entre les deux demi-coquilles s'étendant sensiblement selon un plan contenant l'axe de rotation de la machine.

## Patentansprüche

1. Elektrische Maschine (1) mit:
- einem Gehäuse (2),
- einem Verteilerkasten (6), der an dem Gehäuse befestigt ist,
wobei der Verteilerkasten aus zwei Halbschalen (7) zusammengesetzt ist,
wobei die elektrische Maschine **dadurch gekennzeichnet ist, dass**
die Halbschalen (7), bevor ein oder mehrere Kabeldurchlässe durch Entfernen eines oder mehrerer zu diesem Zweck vorgesehener entfernbarer Teile gebildet werden, identisch sind.

2. Maschine nach Anspruch 1, bei der jede der Halbschalen (7) einen Buchsenteil (26) und einen Steckerteil (25) aufweist, die mit den jeweiligen Stecker- und Buchsenteilen (25, 26) der anderen Halbschale zusammenwirken, wenn die beiden Halbschalen zusammengebaut werden, um den Verteilerkasten zu bilden.

3. Maschine nach Anspruch 2, bei der jeder Steckerteil eine vorspringende Zunge (28) hat, die die Unterseite und die Seite der anderen Halbschale überdeckt.

4. Maschine nach Anspruch 3, bei der das an die transversale Medianebene (M) des Verteilerkastens angrenzende Ende (29) der Zunge (28) sich unter einem Winkel von 45° schräg zur Längsachse der Zunge erstreckt.

5. Maschine nach einem der Ansprüche 1 bis 4, bei der jede der Halbschalen (7) ursprünglich keine offenen Durchlässe für die Kabel außerhalb der Maschine aufweist.

6. Maschine nach einem der Ansprüche 1 bis 5, bei der die Befestigung der beiden Halbschalen durch Schrauben bewirkt wird, die unverlierbar an der betreffenden Halbschale (7) montiert sind.

7. Maschine nach einem der Ansprüche 1 bis 6, bei der jede Halbschale zwei Gruppen von konzentrischen verdünnten Zonen aufweist, die, wenn sie durchtrennt werden, die Bildung eines Kabeldurchlasses mit gewünschtem Durchmesser erlauben.

8. Maschine nach Anspruch 6, bei der jede Halbschale längsverlaufende Schlitze (16) aufweist, die es erlauben, dort ein Schraubwerkzeug für die Schrauben einzuführen.

9. Maschine nach einem der Ansprüche 1 bis 8, bei der jede Halbschale zwei Ständer (20) aufweist, die durch einen kreisförmigen Rand (21) begrenzt werden, der an die Form des Gehäuses (2) der Maschine angepasst ist.

10. Maschine nach einem der Ansprüche 1 bis 9, bei der die Schnittstelle zwischen den beiden Halbschalen sich im wesentlichen in einer Ebene erstreckt, die die Rotationsachse der Maschine enthält.

## Claims

1. An electric machine (1) comprising:
- a casing (2),
- a terminal box (6), fixed to the casing,
the terminal box comprising two half-shells (7) assembled one against the other, the electric machine being **characterized by** the fact that these half-shells (7) are identical before formation of one or more cable runs by removal of one or more removable portions provided for this purpose.

2. The machine as claimed in claim 1, each of the half-shells (7) being provided with a female portion (26) and with a male portion (25) which interact respectively with the male portion (25) and female portion (26) of the other half-shell, when the two half-shells are assembled to form the terminal box.

3. The machine as claimed in claim 2, each male portion (25) comprising a tongue (28) forming a protrusion which covers the top and the side of the other half-shell.

4. The machine as claimed in claim 3, the end (29) of the tongue (28) adjacent to the transverse mid-plane (M) of the terminal box extending obliquely at 45° relative to the longitudinal axis of the tongue.

5. The machine as claimed in any one of claims 1 to 4, each of the half-shells (7) initially having no open run for the cables outside the machine.

6. The machine as claimed in any one of claims 1 to 5, the fixing of the two half-shells being carried out by screws mounted in a captive manner on the corresponding half-shell (7).

7. The machine as claimed in any one of claims 1 to 6, each half-shell comprising two sets of concentric thinned zones making it possible, when severed, to create a cable run of the desired diameter.

8. The machine as claimed in claim 6, each half-shell comprising longitudinal grooves (16) making it possible to engage therein a tool for tightening the screws.

9. The machine as claimed in any one of claims 1 to 8, each half-shell comprising two uprights (20) delimited by a circular edge (21) suitable for closely matching the shape of the casing (2) of the machine.

10. The machine as claimed in any one of claims 1 to 9, the interface between the two half-shells extending substantially on a plane containing the axis of rotation of the machine.
